(19)

Europäisches Patentamt

European Patent Office

Office européen des brevets

(11) **EP 4 348 964 B1**

(12) **EUROPEAN PATENT SPECIFICATION**

(45) Date of publication and mention
   of the grant of the patent:
   **09.04.2025   Bulletin 2025/15**

(21) Application number: **21729284.6**

(22) Date of filing: **26.05.2021**

(51) International Patent Classification (IPC):
   *H04L 41/22* (2022.01)      *H04L 43/045* (2022.01)

(52) Cooperative Patent Classification (CPC):
   **H04L 43/045; H04L 41/22**

(86) International application number:
   **PCT/EP2021/064073**

(87) International publication number:
   **WO 2022/248036 (01.12.2022 Gazette 2022/48)**

(54) **METHODS AND APPARATUSES FOR USE IN A NETWORK ANALYTICS TOOL**

   VERFAHREN UND VORRICHTUNGEN ZUR VERWENDUNG IN EINEM
   NETZWERKANALYSEWERKZEUG

   PROCÉDÉS ET APPAREILS DESTINÉS À ÊTRE UTILISÉS DANS UN OUTIL D'ANALYSE DE
   RÉSEAU

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**

(43) Date of publication of application:
   **10.04.2024   Bulletin 2024/15**

(73) Proprietor: **Telefonaktiebolaget LM Ericsson
   (publ)
   164 83 Stockholm (SE)**

(72) Inventors:
   • **ZLATNICZKI, Ádám
     6640 Csongrád (HU)**

   • **MITCSENKOV, Attila
     1126 Budapest (HU)**
   • **BIRO, Alexander
     1022 Budapest (HU)**

(74) Representative: **Ericsson
   Patent Development
   Torshamnsgatan 21-23
   164 80 Stockholm (SE)**

(56) References cited:
   **US-A1- 2010 175 019      US-A1- 2018 165 847
   US-A1- 2018 285 756**

## Description

## Technical Field

The present disclosure generally relates to methods and apparatuses used in a network analytics tool. In particular, methods and apparatuses according to example implementations as described herein allow for the generation of a sensory-perceptible output indicative of a content-based ranking of a number of visualization objects.

## Background

In order to determine whether service quality and network quality fulfil certain requirements, network analytics systems are utilized. Such network analytics systems are part of the network management domain and monitor and analyze service and network quality at session level in mobile communications networks. These analytics systems have been exploited in Network Operation Centers (NOC), and in Service Operation Centers (SOC) so that service quality is monitored and detected service quality issues can be troubleshot for extended periods of time.

In network analytics systems, basic network key performance indicators (KPIs) are continuously monitored, where the KPIs are based on node and network events and counters. Often, KPIs are aggregated in time, for example for node or other dimensions (for example in relation to a device type, a service provider, or other network dimensions, such as a cell, a network node, etc.). Failures of a node or the network can be indicated via the KPIs. Furthermore, elementary network events and end-to-end service quality metrics may be collected and correlated and user level end-to-end KPIs may be computed based on the available data using advanced analytics systems.

Real-time analytics may be exploited in order to provide for fast reaction in network management. This may require real-time collection and correlation of specific node and protocol events from different radio and core nodes, probing signaling interfaces and the user-plane traffic. Besides such data collection and correlation functions, which may handle a large amount of information, an analytics system may require advanced databases, a rule engine, and a big data analytics platform. The per subscriber service quality and network KPIs may be aggregated for different network dimensions.

Current telecommunication network analytics products thus face the problem of processing an enormous amount of data coming from various sources. Correlation capabilities may allow to filter and split the hundreds of various KPIs by dozens of different dimensions, not to mention their combinations. The slicing and dicing of data leads to potentially endless possibilities for creating charts for visual inspection by a user. Even if the most relevant insights are captured by certain charts, the system might be unable to show the most important chart to the most relevant person.

To overcome this problem, the concept of dashboards was introduced: a thematic or responsibility area driven collection of charts. The motivation behind the creation of dashboards was to make sure that operators or supervising personnel (or more generally: users) keep an eye on charts showing some important piece of information. However, a complex network analytics system is typically targeting a wide variety of users, with different interests and/or responsibilities. Directing the dashboards to the most relevant audience and showing it at the moment when there is a recent change of high importance is a challenging task.

If there are just a few dashboards in the system, the dashboards could be easily assigned to a few clearly defined user roles. But once, with the inclusion of diverse data sources coming with complex 5G (but even 4G) networks, the number of dashboards and the variety of users explodes. Checking all possibly relevant dashboards one by one becomes an impossible task for a user.

A conventional dashboard recommendation system is described in G. Tschinkel, C. di Sciascio, B. Mutlu and V. Sabol: The Recommendation Dashboard: A System to Visualise and Organise Recommendations, 19th International Conference on Information Visualisation, pp. 241-244, IEEE 2015. This recommendation system provides visualization recommendations building upon a bookmarking system for organizing relevant resources into topic collections by deriving user interests from performed actions. The solution also builds upon how users define dynamic dashboards. Using text analytics tools, keywords are extracted from available metadata and high-frequency keywords are added to topics of interest of specific user profiles, which can be edited manually.

US 2010/0057646 A1 describes a method for displaying patient data. Predefined rules are used to define various conditions, and recommendations are made based on these conditions. Users may accept or reject these recommendations, and these actions are fed back to a recommendation engine for further analysis and for generating a new recommendation.

US 2018/0285756 A1 describes a system for generating recommendations for dashboards, changes for dashboards or even new dashboards, based on usage tracking across consumers and a correlation of usage patterns with (portions of) dashboards. When a user makes a search, the system tries to give a prediction of the type(s) of data the user may be interested in.

A. Key, B. Howe, D. Perry and C. Aragon: VizDeck: self-organizing dashboards for visual analytics, SIGMOD '12: Proceedings of the 2012 ACM SIGMOD International Conference on Management of Data, 2012, pp. 681-684, describes a tool for exploratory visual data analytics. The tool allows users to share their dashboards and learns what kind of visualizations are appropriate for a specific dataset based on a voting mechanism. The system tries to learn the importance of datasets with the help of basic descriptive statistics, like the number of distinct elements, information entropy, coefficient of variation, kurtosis, and periodicity in the data.

US 2018/0285756 A1 describes a system for making dashboard recommendations based on tracked user input patterns and predictive analytics. The system stores information on user behavior, including keywords, the way users interact with the dashboard, which other dashboard they open before and after the current one, which searches they do in search engines, which messages they send, etc. Using such usage patterns, a prediction is made for the kind of information that the user likely tries to access. The prediction is queried against dashboards to find recommendations. Characteristics of other users that accessed the same dashboard, and recommendations provided to them, can also be incorporated.

**Summary**

In view of the foregoing, improvements may be required for a network analytics tool, in particular in order to improve a user's awareness of the occurrence of significant changes in the values of monitored network parameters.

According to the present disclosure, there are provided a method, a computer program product and an apparatus according to the independent claims. Further developments are set forth in the dependent claims.

Therefore, according to an aspect of the present disclosure, there is provided a method for a network analytics tool capable of analyzing a time-varying set of parameter values for each of a plurality of measurable parameters and visually outputting a plurality of visualization objects, as defined by the appended independent claim 1.

In certain implementations of the method, determining a value of the first object-related metric comprises determining, for each of two or more visualization items included in the visualization object, a value of an item-related metric based on the set of parameter values of the visualization item, and determining the value of the first object-related metric based on the determined value of the item-related metric of each of the two or more visualization items included in the visualization object.

According to certain implementations, determining a value of the first object-related metric includes performing an anomaly analysis on a group of parameter values comprising the set of parameter values of at least one visualization item included in the visualization object. Such anomaly analysis is performed, at least in certain implementation, separately on the set of parameter values of each of two or more visualization items included in the visualization object.

According to certain implementations, performing an anomaly analysis includes separating the parameter values of the group into at least one normally behaving subgroup and at least one anomalously behaving subgroup.

The method comprising in certain implementations obtaining, for each of a plurality of users, a value of a user-specific second object-related metric in relation to each of two or more of the plurality of visualization objects associated with the user. A user-specific object ranking is established, for each of the plurality of users, on the basis of the value of the first object-related metric and the value of the user-specific second object-related metric of each of the two or more visualization objects associated with the user. Generation of a sensory-perceptible output indicative of the user-specific object ranking is caused.

Establishing the user-specific object ranking includes in certain implementations determining, for each of the two or more visualization objects associated with the user, an object ranking value representative of a multiplicative product of the value of the first object-related metric and the value of the user-specific second object-related metric.

According to certain implementations, establishing the user-specific visualization object ranking includes obtaining an object usage matrix specifying for each of the plurality of users a usage value in relation to each of the two or more visualization objects associated with the user. The usage value is representative of a probability of usage of the visualization object by the user.

The object usage matrix is obtained, in certain implementations, by logging, for each of the plurality of users, visualization object interactions of the user and determining the usage value based on a logged number of visualization object interactions.

Establishing the user-specific visualization object ranking includes in certain implementations a matrix decomposition process which decomposes the object usage matrix into the product of a job role matrix and a toolkit matrix. The job role matrix specifies for each of the plurality of users a job role value in relation to each of two or more job roles, wherein the job role value is representative of a probability of the user being involved in a task related to the job role. The toolkit matrix specifies for each of two or more visualization objects a toolkit value in relation to each of the two or more job roles, with the toolkit value being representative of a probability of the visualization object requiring to be inspected in order to accomplish a task related to the job role.

According to certain implementations, establishing the user-specific visualization object ranking includes determining an object ranking matrix as a product of the job role matrix, the toolkit matrix and a vector including for each of the two or more visualization objects the value of the first object-related metric.

Obtaining a value of the user-specific second object-related metric may include in certain implementations, for each of one or more of the plurality of visualization objects, assigning a default value to the user-specific second object-related metric based on the non-availability of a sufficient amount of logged visualization object interactions associated with the user. Assigning a default value to the user-specific second object-related metric may be useful, e.g., in situations where a new user with an unknown behavior or with unknown preferences regarding the usage of visualization objects accesses the network analytics tool. The assigned default value of the user-specific second object-related metric may be subject to adjustment based on time. The adjustment may be dependent on the extent of information gathered for the new user on his or her usage of visualization objects.

In certain implementations, obtaining a value of the first object-related metric includes, for each of one or more of the plurality of visualization objects, assigning a default value to the first object-related metric based on the non-availability of a sufficient set of parameter values of the measurable parameter of at least one visualization item included in the visualization object. Assigning a default value to the first object-related metric may be useful, e.g., in situations where a new parameter is added to the parameter set being measured. The assigned default value of the first object-related metric may be subject to adjustment based on time, e.g., as more and more measured values of the parameter are obtained.

Certain implementations provide that the measurable parameters are derived at least in part from at least one of a radio access network part and a core network part of a mobile telecommunications network.

According to another aspect of the present disclosure, there is provided a computer program product comprising program code portions that, when executed on at least one processor, configure the processor to perform the method disclosed herein, as defined by the appended independent claim 14.

Yet another aspect of the present disclosure provides an apparatus which is operable in a network analytics tool capable of analyzing a time-varying set of parameter values for each of a plurality of measurable parameters and visually outputting a plurality of visualization objects, as defined by the appended independent claim 15.

**Brief description of the drawings**

These and other aspects of the disclosure will now be further described, by way of example only, with reference to the accompanying figures, wherein like reference numerals refer to like parts, and in which:

Figure 1 shows schematically an overall architecture of an analytics system nation of the present disclosure;
Figure 2 shows schematically a flowchart illustrating an exemplary flow of information in the analytics system of Fig. 1;
Figure 3 shows schematically an exemplary cloud architecture of the analytics system of Fig. 1;
Figure 4 is a flow diagram of steps of a method embodiment of the present disclosure; and
Fig. 5 is a block diagram illustrating an embodiment of an analytics apparatus in accordance with the present disclosure.

**Detailed description**

In the following description, for purposes of explanation and not limitation, specific details are set forth in order to provide a thorough understanding of the present disclosure. It will be apparent to one skilled in the art that the present disclosure may be practiced in other embodiments that depart from these specific details.

While, for example, some embodiments of the following description consider an analytics tool for a mobile communications network, the present disclosure is not limited in this regard. In particular, the present disclosure may also be implemented in an analytics tool for a wired telecommunications system or in analytics tools for systems of an entirely different nature.

Those skilled in the art will further appreciate that the steps, services and functions explained herein may be implemented using individual hardware circuits, using software functioning in conjunction with a programmed microprocessor or general purpose computer, using one or more Application Specific Integrated Circuits (ASICs) and/or using one or more Digital Signal Processors (DSP). It will also be appreciated that when the present disclosure is described in terms of a method, it may also be embodied in one or more processors and one or more memories coupled to the one or more processors, wherein the one or more memories store one or more computer programs that perform the steps, services and functions disclosed herein when executed by one or more processors.

In the following description of exemplary embodiments, the same reference numerals denote the same or similar components.

Certain conventional network analytics tools provide a set of dashboards without any specific dashboard recommendation tools. A dashboard is an example implementation of a visualization object in the sense of the present disclosure and is a visual presentation (e.g., in the form of one or more of a chart, a diagram, a table, a graphic, text, etc.) of one or more measurable parameters each representing a visualization item in the sense of the present disclosure. A pure list of available dashboards may be sufficient if the number of dashboards is small (not more than a few dozen), and assigning them to the responsible users is straightforward, but network complexity nowadays will exceed such boundaries.

Analytics tools using rule-based recommendations may be suited for a user base with a static interest, i.e., interests which can be grasped by a fixed set of rules. Such tools are less effective in a dynamically changing environment where both the user base and the set of active dashboards changes over time. Certain conventional recommender systems only take into account a user's areas of interest, but do not consider the relevance of the current information visible on a given dashboard (note that dashboards generally represent content which varies over time, i.e., they do not represent static content).

Certain conventional analytics systems incorporate more sophisticated usage indicators than simply the number of clicks, such as the time spent by a user on specific dashboards, search keywords used by a user, the particular manner in which users interact with a dashboard, which other dashboards they open before and after a current one, which messages they send, etc., and apply machine learning techniques on top of them. Some conventional analytics systems include elements of basic descriptive statistics of the underlying data. However, these elements of statistics still fail to capture an important aspect of dashboard recommendation: the importance, or relevance, of the information represented by the underlying data. To give a purely illustrative example, if a dashboard is created with monitors a process that usually has no significant changes, e.g., a process measuring the seismic activity in a particular area or a nationwide outage, then most of the time the dashboard will not show anything of interest. However, in the unlikely case of an earthquake or an outage, it may become the absolute top priority dashboard. Naturally, in such cases an alarm system would be activated - but it is not trivial in less extreme scenarios when occasional failures are treated as acceptable, not necessarily calling for an immediate alarm, and there are no clear and easy rules to differentiate between favorable or problematic scenarios. Recommending the dashboard for inspection by an expert is exactly the action needed in such a scenario, as the expert's eye and understanding will be able to make a well-informed decision about whether or not to take action and which action, if any. Where the provision of an alarm system is no viable option (for example, because thresholds need to be updated frequently, which is infeasible), it would be desirable to incorporate a measure of importance of the underlying data into the recommendation process (apart from any other aspects already covered) based on, for example, an anomaly analysis.

It would also be desirable to allow the introduction of new dashboards without encountering cold-start problems, i.e., new dashboards should as much as possible not start with a disadvantage compared to existing, potentially highly used dashboards.

Implementations of the present disclosure are capable of providing a user-specific dashboard recommendation by learning each user's personal interest and behavior, instead of forcing users to play any of a number of pre-defined user roles (categories). Implementations of the present disclosure provide a content importance score, i.e., they establish a measure between a dashboard's content and its relevance. Such content importance score is an example realization of a first object-related metric in the sense of the present disclosure. This score can come, for example, from a detected anomaly's expansion, an inter-cluster distance between segmented data sets, etc., and may provide a more meaningful measure than simple descriptive statistics. Implementations of the present disclosure therefore recommend dashboards based on their current content, i.e., based on the content importance score.

Certain implementations of the present disclosure combine the above approaches of learning each user's personal interest and behavior and determining a content importance score. Such implementations create a dashboard-specific score based on a user-specific ranking and the content importance score. In this way, each user can be presented with a recommendation for a set of dashboards which represent the most adequate dashboards according to the particular user's interest, additionally taking into account the most relevant contents of the current data sets. The dashboard recommendations so created may be useful, e.g., for streaming database architectures having a retention for a given timeframe.

On analytics system in accordance with certain implementations of the present disclosure supports its users in defining new dashboards themselves. These newly defined dashboards become part of the set of dashboards which can be recommended; they may receive an initial popularity boost in order to become visible for other users (and not be dominated by longer-lived, already popular dashboards). This initial boost may fade over time through adjustment of a corresponding default boost value.

Implementations of the present disclosure provide for a re-calculation of the content importance score on a regular or irregular time basis. This allows the recommendation function of the analytics system to find new patterns in the underlying data set and rank them adaptively. The user-specific recommendation can be time-adaptive, as well. This may be particularly useful in circumstances where the analytics system stores session records for only a limited time duration or stores only a limited number of the last sessions; using the user interactions of the stored sessions may ensure that the recommendation function remains adaptive to user preferences.

Embodiments of the present disclosure support users of a telecommunication network analytics system to find and follow a number of most relevant dashboards with respect to their personal interest and responsibility. According to certain embodiments, the analytics system includes a dashboard recommendation function satisfying the following features:

- The recommendation function can discover relationships between typical user profiles ("persona") and individual users (i.e., how a given users interest is split among those personae) and can furthermore discover the importance of dashboards for the user profiles. Combining those two steps, the recommendation function can determine a user-specific interest for individual users having mixed interests.

- The recommendation function can assign a content importance score to current content of a dashboard, highlighting events when the dashboard content reveals a significant, or abnormal (anomalous), state of the network or other system being analyzed by the analytics systems.

- The recommendation function can automatically generate dashboard recommendations based on user-specific interests combined with dashboard content importance, with continuous adaptation to evolving user profiles as well as dynamically changing content importance.

- The recommendation function can incorporate new dashboards into the recommendation set and protect them against cold-start issues.

In the following, an example implementation of a user-specific dashboard recommendation solution for an advanced network analytics tool will be described in more detail. The network analytics tool may comprise, e.g., Ericsson's Expert Analytics (EEA). Complex, end-to-end correlated, multi-domain network analytics systems can monitor the network in various layers, e.g., the packet core control plane & user plane via node logs and/or probing, the Radio Access Network (RAN) by processing cell trace records (CTRs), the IMS control plane for VoNR/VoLTE services, etc. Typically, hundreds of different KPIs are derived for all of these domains, and the end-to-end correlation provides a large number of dimensions for filtering and comparison of network segments, user groups, nodes among others, etc. These altogether lead to virtually endless possibilities for the generation of charts, some of which may be recorded on thematic dashboards. The dashboard recommendation system described below is operable to work with a long list of such dashboards and with a registered user base; by learning user interests and monitoring the importance of information on the dashboards, the dashboard recommendation system is capable of making recommendations to the users regarding particular dashboards which the users should check at any given time.

**Exemplary node level architecture**

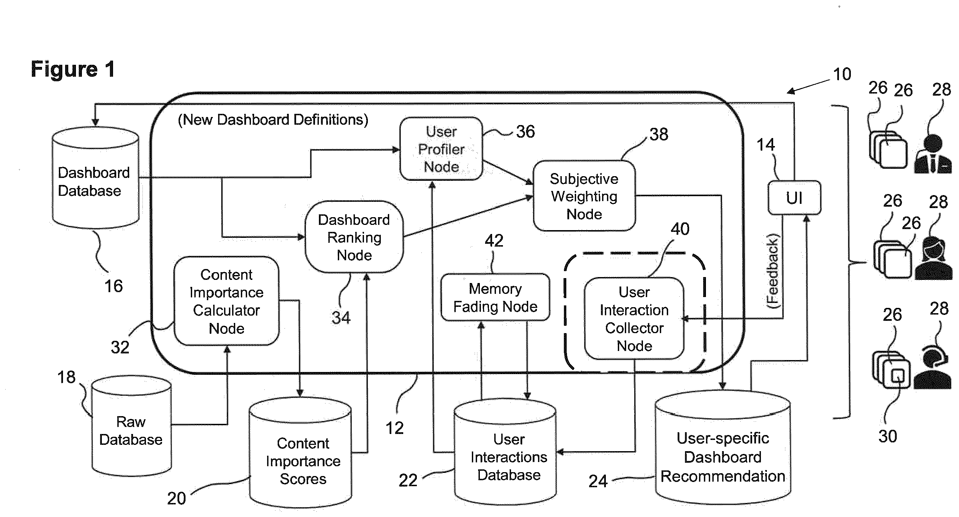

Reference is now made to Fig. 1 which shows the overall architecture of an analytics system in accordance with an example embodiment of the present disclosure. The analytics system is generally designated 10 and comprises as its principal components a recommendation engine 12, a user interface (UI) 14 and a number of databases 16, 18, 20, 22, 24. The recommendation engine 12 and the user interface 14 are capable of accessing the databases 16 to 24. The databases 16 to 24 represent the lowermost logical level of the system architecture. In the illustrated system architecture, the database 16 holds definitions for a plurality of dashboards, the database 18 holds the raw data (i.e., measured parameter values) to be visualized in the dashboards, the database 20 stores calculated content importance scores, the database 22 stores logged user interactions, and the database 24 holds user-specific dashboard recommendations. The actual number and content of the databases 16 to 24 can vary and is not limited to what is shown in Figure 1. It is to be understood that it is within the scope of the described embodiment for the "raw data" to be the result of preceding calculations. The UI 14 is configured to output dashboards 26 and other information in a visually perceptible manner on one or more display devices (not shown in the drawings) to users 28 and receive user input from the users 28 through, e.g., a keyboard, keypad, touchscreen or other type of input device (not shown, again). Each dashboard 26 comprises at least one chart 30 or other type of visualization item suitable for presenting a KPI, or more generally: a measurable parameter, in a manner allowing users 28 to grasp time-varying content conveyed by the parameter. Each measurable parameter represents a different data source, which is why the terms chart, data source and parameter can be used interchangeably herein.

A set of recommended dashboards 26 may be visually presented to a user 28, for example, in a stacked, partially overlapping manner, with a dashboard ranked highest among the set appearing at the top of the stack and a dashboard ranked lowest among the set appearing at the bottom of the stack. In such a scenario, the order in which the dashboards are arranged in the stack follows their relative ranking. Whenever the dashboard ranking changes due to, e.g., a change in content importance of one or more dashboards of the set, the order of the dashboards in the stack can be re-adjusted to reflect the changed dashboard ranking. It is conceivable that whenever the dashboard ranking changes, a visually and/or audibly perceptible alert is outputted to the user 28. The dashboard ranking can alternatively be presented to the user 28 using representative symbols, icons, characters, numbers, etc., instead of displaying the dashboards themselves in a particular order.

One of the functionalities of the recommendation engine 12 is the calculation of a content importance score in relation to each chart or data source or parameter representing a source or origin of raw data. Content importance is meant to capture "interesting" events in the associated data. An event may be considered interesting if it induces a large or unpredictable change in the data. Various algorithms coming from statistics and machine learning may be used to identify such anomalous behavior. These algorithms assign a score or probability for an event to be an anomaly, which in turn can be used to measure content importance.

The recommendation engine 12 includes, in the illustrated example implementation according to Figure 1, a content importance calculator node 32, a dashboard ranking node 34, a user profiler node 36, a subjective weighting node 38, a user interaction collector node 40 and a memory fading node 42. In a 5G network, the functionalities ensured by these nodes 32 to 42 may wholly or partially be implemented as a network function (NF).

The content importance calculator node 32 is responsible for performing the requisite calculations to determine a content importance score for each chart/data source/parameter. The calculated content importance scores are stored in the content importance score database 20. They can be viewed as an item-specific metric, i.e., specific to one visualization item.

The dashboard ranking node 34 is responsible for determining an importance score (first object-specific metric) in relation to each dashboard for which a definition is held in the dashboard database 16. The dashboard ranking node 34 can access the dashboard database 16 and can query for each dashboard the associated dashboard definition (which describes what kind of data is available/included in the dashboard). The dashboard ranking node 34 then calculates a dashboard importance score based on the content importance scores belonging to the sets of raw data upon which the dashboard is defined. The dashboard importance scores can be viewed as object-specific scores as they are specific to distinct visualization objects/dashboards. Where a dashboard 26 includes a single data source/parameter/chart, the dashboard importance score can be simply the content importance score of the single data source/parameter/chart. Where a dashboard 26 includes a plurality of different data sources/parameters/charts, the content importance scores of the data sources/parameters/charts may be suitably aggregated. One exemplary implementation is simply selecting the largest content importance score. It is to be understood that different embodiments may choose other methods of aggregation. The dashboard importance score can thus adapt to changes in the underlying data.

The user profiler node 36 can run parallel to the dashboard ranking node 32, obtaining user-specific importance scores (second object-specific metric) which define characteristics about the interests of specific users. This information is a useful supplement to the dashboard importance scores, because even though a dashboard 26 may show important content, some users might still deem it unimportant based on their own interests. User profiling has also a vast academic background - some exemplary embodiments may use clustering techniques or simple descriptive statistics. User-specific importance can be calculated for either specific dashboards, or for specific datasets.

The output of the dashboard ranking node 34 and the user profiler node 36 is finally processed by the subjective weighting node 38, which is configured to combine the objective importance of the dashboards with the subjective perception of users. Again, there can be several solutions - the simplest example could be a simple linear combination of the dashboard importance scores and the corresponding user interest scores. The resulting subjective dashboard importance scores (per user) are stored in the database 24, which can be queried by the UI 14 to show the best dashboards to each specific user. Note that it is also possible to build the process for user groups instead of specific users. As used herein, the term "user" thus does not necessarily refer to a single person, but may encompass any group of individuals or "personae" for which a specific dashboard recommendation is desired to be generated.

As users interact with the UI 14, their actions are logged into database 22 to enhance the recommendation process with implicit feedback, supported by the user interaction collector node 40. It may, however, be a desirable feature for the recommendation engine 12 to be adaptive to changes in user interests. For this reason, the memory fading node 42 is introduced, which is configured to remove entries from the user interactions database 22 based on suitably defined principles. Exemplary embodiments may foresee to remove entries from the user interactions database 22 after a predefined amount of time has passed since, or to always store no more than a predefined number of entries per user, and so on.

Users may additionally have the chance to create their own dashboards, e.g., through using the UI 14. In such cases, newly generated dashboards are faced with a cold start problem, which may easily cause them to be dominated by already existing, highly used dashboards. In order to overcome this problem, each new dashboard may be given, by default and upon creation, a boost value representing a boosted importance, which fades away gradually. Information on the level of fading of the initial boost is part of the information which may be stored in the dashboard database 16. Various solutions are conceivable to implement a fading of the initial boost, some including exponential smoothing over time, Laplace smoothing over usage, ... etc.

**Exemplary process flowchart**

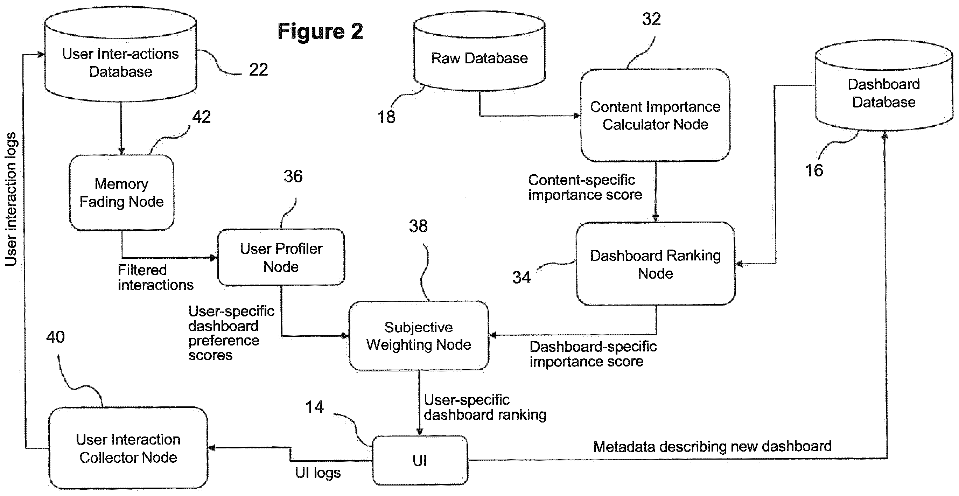

Figure 2 shows a flowchart illustrating an exemplary flow of information in the analytics system 10 of Fig. 1. From a high-level perspective there are two large components - one of them is responsible for calculating the objective dashboard importance scores, and the other one is responsible for calculating the subjective user-specific importance scores.

Calculating the dashboard importance scores can be done either separately or synchronized to the user profiling, possibly on a periodic basis. It should be noted, however, that while user profiles are expected to vary slowly, dashboard importance can change rather rapidly as an anomaly emerges in the underlying data. In order to capture such events in a timely manner, dashboards importance score calculation may be carried out at a higher frequency. This may amount to setting a higher trigger frequency for the content importance calculator node 26 or implementing it in a streaming environment. When the node 26 finishes, it automatically triggers the dashboard ranking node 28, which can be implemented as part of a streaming pipeline, as well.

The calculation of the subjective user-specific importance scores can be implemented as a feedback loop. The user interaction database 22 may be queried occasionally in a periodic manner by the memory fading node 42 in order to remove unnecessary entries. This can be implemented in different ways. For example, a first approach is to store all interactions that accumulate over time (possibly considering some form of retention, though), and the node 42 simply filters the results, forwarding it to the user profiler node 36. This can be implemented as part of a streaming pipeline, as well. Another approach is an offline approach, where the node 42 is triggered in a periodic way and updates the database 22 by actually removing unnecessary entries. The resulting stream or updated database is then accessed by the user profiler node 36. The user profiler node 36 can be implemented as part of a streaming pipeline, although it may be more efficient from resource consumption point of view to run it in a batch mode due to the slowly varying nature of user profiles.

Finally, the results of the user profiler node 36 and the dashboard ranking node 34 are consumed by the subjective weighting node 38 to produce the subjective user specific dashboard recommendations. The subjective weighting node 38 can again be implemented either as part of a streaming pipeline or in a batch processing manner. However, due to the expected volatility of the dashboard importance scores it may be desirable if the subjective weighting node 38 is capable of providing reports with a high frequency. Note that the nodes 34, 36, 38 can be integrated into a single node if the nature of the recommendation algorithm requires so.

The interactions of the users on the UI 14 are then collected and fed back to the user interaction database 22. In case a new dashboard is created by a user, it is stored in the dashboard database 16. If a new dashboard is created, it is given an initial importance boost, which is gradually decreased in the dashboard ranking node 34.

**Exemplary implementations**

*Choosing the type of user feedback*

Here we present an exemplary implementation of a dashboard recommendation system that fits the concepts presented so far. First, we note that telecommunication analytics dashboards are by nature different than movies, books, and the like - therefore, their ranking by users is also different. The users of dashboards inside organizations usually belong to one or more, but definitely a finite number of job roles, which highly affects the selection of dashboards in which they are interested. In order for employees to perform their job successfully, they mostly have to view a given set of dashboards which help their everyday tasks - they do not rate the dashboard explicitly, but instead either use a dashboard or not. This kind of user rating is referred to as implicit feedback data in the academic literature and has the advantage of being available without the need for an employee to always update his or her rating on a dashboard. This is beneficial, since otherwise the user might either skip the ranking dialog, or even worse, he or she might be frustrated and give practically random or constant explicit ratings just to get over the ranking dialog - both cases rendering the recommendation process useless.

The implicit feedback of simply using a dashboard or not can be stored in usage matrices, where the rows represent the users and the columns represent the dashboards. Each row can be normalized to sum to one, which would result in the relative frequency of usage of each dashboard for the given user. In order to incorporate memory fading, one could continuously apply a sliding-window-like approach by retaining only the last $N$ feedbacks from a specific user, which helps keeping the recommendation system adaptive. Another possible improvement is for the system to only count dashboard views if the user spends at least a prescribed amount of time on the dashboards (otherwise it is most probably a misclick, or the dashboard did not seem to be useful to the user after all).

We can also notice that in the environment of a network analytics system the users may have no means to specify dislike against a specific dashboard - they can only specify their liking. Such ratings are called unary in the literature. The benefit of this kind of rating is that missing data can be imputed with zeros without significantly biasing the recommender system.

*Calculating content importance*

Content importance builds on top of a process when an embodiment of the analytics system identifies anomalies for the available dashboards. Such embodiments generate a binary variable indicating whether a given object (parameter value) has anomalous behavior or not in a population (time-varying set of parameter values). The binary variable can be used to separate the population into a subset of anomalies and a subset of normally behaving objects. After this separation, a linkage-type distance can be calculated. First, data behind the dashboards can be standardized to obtain a common scale for all of them. After that, one may identify the point of the anomalously behaving subset which is closest to the normally behaving subset. A mean may be calculated from the normally behaving set and the standard deviation of the entire population may be calculated. A vector can then be generated which contains for all dashboards a number specifying how many times the standard deviation can be gauged on the mean-closest anomaly distance. This results in a vector $\underline{y}$ which can be applied as a natural definition of ranking between dashboards. The scores are interchangeable to 1, ..., m ranks, and weights can be added by converting them to an exponential scale: $y_1 = \exp(-1), ..., y_m = \exp(-m)$. A normalized vector which sums to one can then be generated by dividing it with $cons. = y_1 + y_2 + \cdots + y_m$. We denote this vector with $\underline{c}$; it contains the following elements

$$\underline{c} = \frac{y_1}{const.}; ...; \frac{y_m}{const.}.$$

*Learning user behaviors and job role toolkits*

When both the implicit user feedback and the content importance is available, there are various options for obtaining the final dashboard recommendations. There is a vast literature on recommender systems, and many of them can be implemented in the architecture and dataflow presented in this disclosure. As an example, we will describe an embodiment which uses matrix factorization. There are certain advantages of this approach, one of them being that the dashboard ranking node 34, the user profiler node 36 and the subjective weighting node 38 can be combined into a single node.

Let there be *n* users who would like to see dashboard recommendations, and m dashboards. As has been discussed above, implicit user feedback can be represented in an $n \times m$ matrix F, where the element in the $u^{th}$ row and $d^{th}$ column, $f_{ud}$, is the probability of user u checking out dashboard d. This probability is calculated by counting (in the sliding window) how many times user u opened dashboard d, and dividing this by the total number of times user u opened any one of the dashboards.

Note that if user u belongs to more than one job role, then the probability that user *u* checks dashboard d due to fulfilling a task in job role *j* is simply the probability that user *u* performs a task related to job role *j* multiplied by the probability that a task belonging to job role *j* can be carried out by checking out dashboard *d*. Assume that the number of job roles is fixed to *k*. Note that *k* is not necessarily the number of jobs in an organization - it is more like a set of different user behaviors that can be expected to happen. It is not necessary to specify what these behaviors are, it suffices to state how many these behaviors the algorithm should try to learn (in the assumed case, *k*). Let $\underline{P}$ be an $n \times k$ matrix (job role matrix) where the element in the $u^{th}$ row and $j^{th}$ column gives the probability that user *u* is involved in a task related to job role *j*. Let us also define the $m \times k$ matrix Q (toolkit matrix) where the element in the $d^{th}$ row and $j^{th}$ column gives the probability that dashboard d has to be checked in order to finish a task related to job role j. Note that:

$$\underline{F} = \underline{P}\,\underline{Q}^T.$$

The probabilities in neither $\underline{P}$ nor $\underline{Q}$ are known. In order to find these, non-negative matrix factorization with certain additional constraints can be applied. The optimization task can be formulated as

$$\min \left\| \underline{F} - \underline{P}\,\underline{Q}^T \right\|_F^2$$

with the following constraints:

$$0 \le \underline{P} \le 1,$$

$$0 \le \underline{Q} \le 1,$$

$$\underline{P}\,\underline{1} = \underline{1},$$

$$\underline{Q}\,\underline{1} = \underline{1},$$

$$\underline{P}\,\underline{Q}^T\,\underline{1} = \underline{1}.$$

Here $\|\cdot\|_F^2$ denotes the square of the Frobenius norm of a matrix. The first two constraints state that each element of $\underline{P}$ and $\underline{Q}$ must be a probability (i.e. in the range [0,1]). The second and third constraints state that each row of $\underline{P}$ and $\underline{Q}$ must sum to 1, and that the rows of their product must also sum to one (i.e. satisfy the law of total probability). The optimization task can be solved, e.g., by using variants of the gradient descent method (like sequential quadratic programming), or by alternating least squares with the constraints included.

The matrix $\underline{P}$ actually gives the user profiles (meaning how different users typically behave). The relative importance of a dashboard for a job role is stored in $\underline{Q}$ - this can be interpreted as typical toolkits for different job roles.

A reason for the matrix factorization of *F* is that a 0 in a particular position of *F* allows no conclusion whether the user belonging to the row position of the 0 did not want to use the dashboard associated with the column position of the 0, or whether the user simply did not know or forgot about the dashboard (since there can be so many dashboards). By deriving $\underline{P}$ and Q one can try to find common usage patterns across users having similar (but not exactly the same) roles who should be using similar dashboards.

*Ranking dashboards*

Let us also introduce the $n \times m$ dashboard ranking matrix $\underline{R}$. This matrix holds information about how relevant a given dashboard is to a given user, including the content importance. The content importance is, however, dependent on the job role. Let the *m*

$\times$ *k* matrix $\underline{C}$ be the matrix of content importance of a dashboard relative to specific job roles. Each column of $\underline{C}$ is obtained by taking the Hadamard (or elementwise) product of the corresponding column of $\underline{Q}$ and the vector of dashbord content importance scores, $\underline{c}$. Finally, we obtain the ranking as:

$$\underline{\underline{R}} = \underline{\underline{P}} \, \underline{\underline{C}}^T.$$

The element of $\underline{R}$ in the $u^{th}$ row and $d^{th}$ column specifies how important dashboard d is to user u given the current content importances.

*Possible performance optimizations*

The above described approach is based on the assumption that users may have to admit to different user behaviors or that sets of dashboards which have to be checked against different job roles are overlapping, so that both user behavior (i.e., $\underline{P}$) and the typical toolkit for job roles (i.e., $\underline{Q}$) must be learned by the algorithm. In certain cases, this assumption may not hold true; for example, different job roles may only require non-overlapping sets of dashboards. In such cases, the process can be simplified by manually fixing the elements of $\underline{Q}$. Similarly, if users are guaranteed to only behave in a single specific manner, the elements of $\underline{P}$ can also be fixed. As long as at least one of them is not fixed, one can still find the other through non-negative matrix factorization, only allowing changes in the matrix under estimation. If both $\underline{P}$ and $\underline{Q}$ are fixed, non-negative matrix factorization is not necessary; in this case, $\underline{C}$ can be constructed right away each time a recommendation is necessary.

Note that the matrix factorization does not have to be computed each time a recommendation is necessary, because it is very unlikely that the user behavior and typical toolkit change too frequently. It is acceptable and computationally more feasible to update the matrices $\underline{P}$ and $\underline{Q}$ only occasionally, although "occasionally" depends very much on how rapidly things change inside the organization. On the other hand, updating $\underline{c}$ (and therefore $\underline{C}$) is most likely done more frequently.

*Handling cold-start problems*

It is desirable to protect the recommender system against cold-start problems. There are different kinds of cold-start issues that can arise: a new user might enter, a new dashboard might appear, or the system itself has only been deployed recently and overall there is not much information in the database(s).

When new users enter the organization, there is no data about their behavior. As such, we can initialize their row in $\underline{F}$ to a uniform prior (or a different prior if we know better) and apply Laplacian smoothing as we gather more and more information about their dashboard usage.

When a new dashboard appears, users might not notice it, therefore it is important to give it a certain boost. This can be achieved by adding a (higher) number to the actual number of views for each user in the sliding-window (even if they have not seen the dashboard) and calculate F only after this. This extra number of views granted to the dashboard can be decremented gradually as time goes by. This could also be done with the relative frequencies right away, which may be preferable in certain instances, as the scale of the number of views will then not matter. This can be relevant when some users use the dashboards a lot more than others - in this case, adding a "higher" number might not be well-defined, but altering the relative frequencies works the same way for all users.

Finally, if the amount of data is low, it is possible to assign uniform priors over both rows and columns and apply Laplacian smoothing.

**Cloud implementation**

*Cloud level architecture*

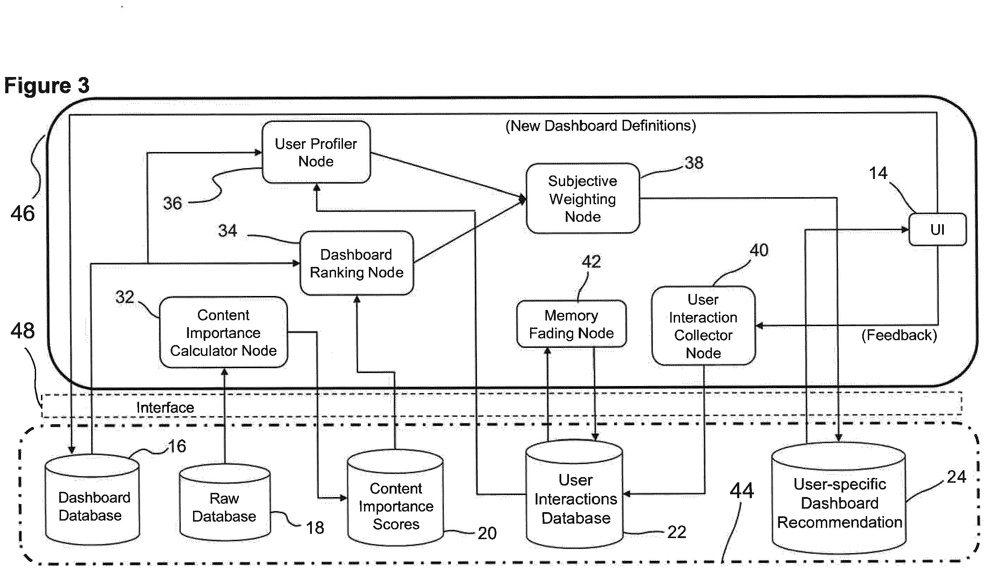

Figure 3 shows an exemplary cloud architecture of the analytics system 10 of Fig. 1. The cloud architecture comprises two separable logical units: at the bottom are the different databases 16 to 24 which are integrated into a persistent data storage 44 of the cloud (for example MinIO). The databases 16 to 24 can be accessed by the cloud's recommendation engine. The cloud is designated 46. The databases 16 to 24 can be expanded and may be defined for additional sources, but the following is provided as a basis of the analytics system 10: the dashboard definitions, the raw data that is visualized in the dashboards, the content importance scores, logged user interactions, and the user specific dashboard recommendations. The raw database 18 can be provided from an aggregation system which may likewise run on the cloud (possibly in a different namespace).

All interaction between software instances in the cloud and the persistent data storage 44 communicate through a cloud API 48. Content importance scoring is run to detect anomalous behavior and to assign scores or probabilities to the events. It should receive input from the raw database 18 and writes its output into content importance scores database 20. In a next step, user interaction collector instance should start and collect usage statistics of users. This node does not have to start at the system's first run, since at a new deployment there will be no interactions to collect. The pod will write the gathered data to the user interactions database 22. As part of the user interaction collector instance the memory fading instance should run attached at every run; this instance creates changes in the user interactions database 22 by adapting and deleting database entries.

The user profiler instance can run parallel to the dashboard ranking instance; the first instance would provide the user specific importance scores from the dashboard database 16 and the user interactions database 22. The dashboard database 16 may be refreshed at every start with new dashboard definitions of the system 10. The dashboard ranking instance collects data from the dashboard database 16 and from the content importance scores database 20. Both nodes 34, 36 pass their output to the subjective weighting instance.

At last, the subjective weighting instance creates the user-specific subjective dashboard importance scores that are written into the user-specific dashboard recommendation database 24, which is utilized by the UI 14 engine to provide the most important and valuable visualizations to the user.

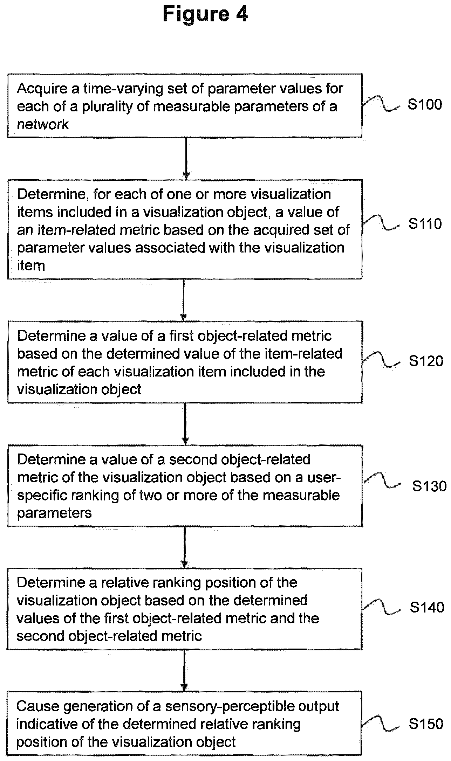

Figure 4 shows a flow diagram of steps of a method in accordance with an exemplary embodiment of the present disclosure. The method can be implemented in the analytics system 10 of Fig. 1. The method comprises a step S100 of acquiring a time-varying set of parameter values for each of a plurality of measurable parameters of a network. The parameter values may be stored in the raw database 18. At least some of the parameters each represent, e.g., a key performance indicator (KPI) of a telecommunications network. At least some of the parameters may be directly measurable, e.g., in a radio access network part and/or in a core network part of the telecommunications network; alternatively or additionally, at least some of the parameters may be derived from measurable quantities which can be measured directly in the telecommunications network. Whether directly measured or derived, the term "measurable parameters" as used in the present disclosure is meant to encompass all such possibilities. The acquiring step S100 acquires for each of the measurable parameters a set of values representing a time series of the parameter. For example, each of the parameters may be sampled or calculated at regular or irregular intervals, and whenever a new value is obtained for a parameter the new value may be added to the set of parameter values stored for the respective parameter in the raw database 18. In turn, the oldest parameter value(s) may be removed from time to time from the raw database in accordance with predefined criteria. In this way, the set of parameter values stored for each parameter in the raw database 18 can be kept at a manageable size; at the same time, it can be ensured that occurrences giving rise to significant changes in the value of a parameter can be properly reflected in the sets stored in the raw database 18. The sampling or update rate of the parameters may be the same or may be different for different parameters.

Each of the measurable parameters can be individually visualized on the user interface, UI, 14 by way of a visualization item 30. Each visualization item 30 represents a single parameter and visualizes, at least in certain embodiments, a temporal behavior and/or a current state of the parameter in graphical and/or numerical form. The visualization item 30 may be also referred to as a chart in certain embodiments. Note that the particular form of visualization of a parameter is of no heightened relevance for the present disclosure and that any suitable manner of visualizing a temporal behavior and/or a current state of the parameter on an electrically/electronically controllable display device can be used.

The method of Figure 4 proceeds with a step S110 of determining, for each of one or more visualization items included in a visualization object, a value of an item-related metric based on the acquired set of parameter values associated with the visualization item. As noted further above, a dashboard 26 as one implementation of a visualization object within the scope of the present disclosure may serve to visualize a single parameter and may consequentially include a single visualization item or may serve to visualize a plurality of parameters and may thus comprise a corresponding plurality of visualization items. Which parameter(s) is/are comprised in a dashboard 26 is defined in the dashboard definitions stored in the dashboard database 16.

As also noted above, one aspect of implementations of the present disclosure is the determination of an objective score indicating an importance (or relevance) of the content of a dashboard 26 and the use of this score in establishing a dashboard ranking. The objective score is not determined based on user interest, but instead is determined based on a statistical analysis of the stored values of the parameter(s) comprised in each dashboard 26. Where a dashboard 26 comprises a single parameter, a score indicating an objective importance (or relevance) of a parameter may directly express an objective importance (or relevance) of the dashboard 26. Where a dashboard 26 comprises a plurality of parameters, however, an objective importance (or relevance) of the dashboard 26 may be derived from individual objective importances (or relevances) of the parameters included in the dashboard 26. Before determining an objective score of a dashboard 26, the exemplary method of Fig. 4 thus determines an objective score of each parameter included in a dashboard 26. To be more specific, the method determines in step S110 an objective score for each parameter for which a set of parameter values is stored in the raw database 18 and/or which is referenced in any of the dashboard definitions held in the dashboard database 16. The related scores are parameter-specific and each represent an item-related metric. The determination of the objective parameter-specific score may be performed by the content importance calculator node 32, which may, for example, perform an anomaly analysis on each set of parameter values to separate the values of the set into a subset of normally behaving parameter values and a subset of anomalously behaving parameter values. With the parameter values of each set so subdivided, the content importance calculator node 32 may determine for each parameter (visualization item 30), e.g., a parameter-specific distance metric representing a statistical distance measure between the normally behaving subset and the anomalously behaving subset.

The content importance calculator node 32 may store the determined objective parameter-specific scores in the content importance scores database 20.

The method of Fig. 4 proceeds with a step S120 of determining a value of a first object-related metric based on the determined value of the item-related metric of each visualization item included in the visualization object. As noted above, where a dashboard 26 comprises a single parameter, the objective parameter-specific score of the single parameter may be directly used as objective dashboard-specific score of the dashboard 26. In a case where a dashboard 26 comprises a plurality of parameters, the method of Fig. 4 determines in step 120 an objective dashboard-specific score based on the objective parameter-specific scores of the various parameters included in the dashboard 26. In a simple example, an objective dashboard-specific score may be determined by selecting the largest parameter-specific score among the various parameter-specific scores associated with the dashboard 26. Other forms of aggregation of plural parameter-specific scores into an objective dashboard-specific score are likewise conceivable. The so-determined objective dashboard-specific score represents a value of a first object-related metric within the scope of the present disclosure. The determination of the objective dashboard-specific score may be performed by the dashboard ranking node 34, which may determine an objective dashboard-specific score for each dashboard 26 for which a definition is held in the dashboard definitions database 16.

In other embodiments, step S110 may be skipped and the determination of objective parameter-specific importance scores may not be needed. Instead, it is conceivable for the dashboard ranking node 34 to have direct access to the raw database 18 and determine an objective dashboard-specific score based on a statistical analysis of the entirety of the sets of parameter values associated with each respective dashboard 26, provided that plural parameters are included in the respective dashboard 26. For example, it is conceivable for the dashboard ranking node 34 to determine for a normally behaving subset and an anomalously behaving subset of each of several parameters included in a dashboard 26 a respective mean or median, to group the means (or medians) of the normally behaving subsets into a first group of means (or medians), to group the means (or medians) of the anomalously behaving subsets into a second group of means (or medians), and to determine a statistical distance measure such as, e.g., an interquartile distance between the first and second group of means (or medians) as an objective dashboard-specific score.

The determined objective dashboard-specific scores may be forwarded by the dashboard ranking node 34 to the subjective weighting node 38.

The method of Fig. 4 proceeds with a step S130 of determining a value of a second object-related metric of the visualization object based on a user-specific ranking of two or more of the measurable parameters. This determination may be made by the user profiler node 36 based on logged user interactions; corresponding logging information can be retrieved by the user profiler node 36 from the user interactions database 22. The second object-related metric represents a score assigned to a dashboard 26 based on an amount of usage of the dashboard 26 by a specific user; the second object-related metric thus reflects needs and/or preferences of a specific user 28 and is a subjective measure for the importance or relevance of a dashboard 26. The second object-related metric can also be referred to as a subjective dashboard-specific score; it is independent of the values of the parameters included in the dashboard 26 and is instead determined based on the usage behavior of the user 28. The user profiler node 36 determines a subjective dashboard-specific score for each dashboard 26 used by each respective user 28 of the analytics system 10. The subjective dashboard-specific score is thus a user-specific score; it can be different for different users 28 of the same dashboard 26.

The determined subjective dashboard-specific scores may be forwarded by the user profiler node 36 to the subjective weighting node 38.

The method proceeds with a step S140 of determining a relative ranking position of the visualization object based on the determined values of the first object-related metric and the second object-related metric. This determination may be made by the subjective weighting node 38 using the received objective and subjective dashboard-specific scores from the dashboard ranking node 34 and the user profiler node 36. For example, the subjective weighting node 38 may multiplicatively weigh each objective dashboard-specific score with each subjective dashboard-specific score available for each respective dashboard 26, yielding for each dashboard 26 a plurality of user-specific final dashboard scores. The final dashboard scores are dashboard-specific and user-specific and each represent a user-specific dashboard recommendation score which determines a user-specific relative ranking position of the associated dashboard 26 with respect to other dashboards 26 used by the same user 28. The so-determined final dashboard scores may be saved by the subjective weighting node 38 in the user-specific dashboard recommendation database 24.

The method concludes with a step S150 of causing generation of a sensory-perceptible output indicative of the determined relative ranking position of the visualization object. This step may be implemented by the UI 14 by accessing the user-specific dashboard recommendation database 24 to retrieve therefrom the final dashboard scores associated with a specific user 28. Based on the retrieved final dashboard scores, the UI 14 may determine a user-specific dashboard ranking in which the dashboards 26 of interest to a particular user are ranked in accordance with their final dashboard scores. As can be easily appreciated from the foregoing description, the relative position of a dashboard 26 in the ranking may change, e.g., as a result of significant changes in the parameter values of one or more parameters included in the dashboard 26. The UI 14 may be configured to visualize on one or more display devices (not shown in the drawings) the dashboard ranking and any changes in the ranking in a manner which can be easily recognized by a user 28.

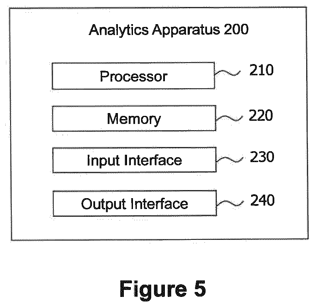

Fig. 5 is a block diagram illustrating an embodiment of an analytics apparatus 200 in accordance with the present disclosure. The analytics apparatus 200 may implement some or all of the functionalities of the analytics system 10 and may implement some or all of the steps of the method of Fig. 4. The analytics apparatus 200 comprises a processor 210 and a memory 220 coupled to the processor 210. The memory 220 stores program code (e.g., in the form of a set of instructions) that controls operation of the processor 210 so that the analytics apparatus 200 is operative to perform any of the method aspects presented herein (see, e.g., Fig. 4). As understood herein, a processor, such as processor 210, may be implemented using any processing circuitry and is not limited to, for example, a single processing core, but may also have a distributed topology (e.g., using cloud computing resources).

The analytics apparatus 200 further comprises an input interface 230 and an output interface 240. The two interfaces 230, 240 may implement the UI 14 of the analytics system 10 of Fig. 1. Referring to the flow diagram of Fig. 4, operation of the analytics apparatus 200 may comprises execution of the steps S100 to S150.

Since, in certain implementations of the present disclosure, a first object-related metric is determined based on measured values of one or more parameters included in a visualization object, changes in these parameter values may result in a change in the value of the first object-related metric. The changed value of the first object-related metric may, in turn, result in a changed relative ranking position of the visualization object with respect to the relative ranking positions of other visualization objects composed of other parameters. Thus, an implementation of the present disclosure may adjust the visualization object ranking as the relative significance of the content of the visualization objects (as represented by the measured parameter values) changes. By suitably visualizing the changed visualization object ranking, it can be made sure that in spite of a potentially large number of visualization objects which a user needs to monitor, or check, in order to fulfil a particular job, the user can nevertheless take notice of important occurrences in the parameter(s) of a particular visualization object.

The visualization object ranking can be visualized in any conceivable manner. For example, an order in which the ranked visualization objects, or parts thereof or icons or other symbols representing the visualization objects, are displayed on a display device may reflect the relative ranking of the visualization objects. A change in the visualization object ranking may thus result in a change in the displayed order of the visualization objects (or representative icons/symbols). If a change in the visualization object ranking occurs, this may be notified to a user by outputting an audibly and/or visibly perceivable warning indication.

Disclosed herein are embodiments of a telecommunication network analytics tool which is extended to include a dashboard recommendation engine. The dashboard recommendation engine may:

- calculate a user-specific interest score for any dashboard (combined user interest as a mix of different profiles/personae; and the relevance of dashboards for these profiles/personae);
- calculate a content importance score of a dashboard based on its current content (i.e., current parameter values) and the possibility that it highlights a significant event or abnormal behavior that needs examination;
- provide user-specific individual dashboard recommendations based on a composition of user interest score and content importance score;
- support the introduction of new dashboards and ensure fairness to newcomers, avoiding cold-start phenomena preventing new dashboards from gaining interest;
- dynamically adapt to changing interests of users and dynamical content of dashboards.

As has become apparent from the above detailed description, certain embodiments of the present disclosure provide a network analytics tool implementing a dashboard recommendation function which is suited to distinguish between users and give recommendations to the users about which dashboards they should consider for further analysis. Certain embodiments configure the network analytics tool to be pro-active and automatized so that users obtain up-to-date, adaptive recommendations. In some variants, these recommendations are based on both user preferences and the context behind a dashboard. Certain embodiments provide a network analytics tool which is capable of learning user behavior (e.g., for each different user), combining it with cross-user characteristics and inferring the importance of the content. Certain embodiments help to avoid so-called cold-start problems of the dashboard recommendation function.

## Claims

1. A method for a network analytics tool capable of analyzing a time-varying set of parameter values for each of a plurality of measurable parameters and visually outputting a plurality of visualization objects (26), each of the visualization objects (26) comprising one or more visualization items (30), each visualization item (30) representative of one of the plurality of measurable parameters, the method comprising:

obtaining (S120), for each of the plurality of visualization objects (26), a value of a first object-related metric;
establishing (S140) a visualization object ranking on the basis of the value of the first object-related metric and a value of a second object-related metric of each of the plurality of visualization objects (26), the value of the second object-related metric determined based on a user-specific ranking of measurable parameters independently of the parameter values of the measurable parameter of each visualization item (30) included in the visualization object (26); and
causing (S150) generation of a sensory-perceptible output indicative of the visualization object ranking established on the basis of the obtained value of the first object-related metric and the obtained value of the second object-related metric of each of the plurality of visualization objects (26),
wherein obtaining a value of the first object-related metric includes:
for each of one or more of the plurality of visualization objects (26), determining a value of the first object-related metric based at least on the set of parameter values of the measurable parameter of each visualization item (30) included in the visualization object (26).

2. The method of claim 1, wherein determining a value of the first object-related metric comprises:

determining (S110), for each of two or more visualization items (30) included in the visualization object (26), a value of an item-related metric based on the set of parameter values of the visualization item (30);
determining the value of the first object-related metric based on the determined value of the item-related metric of each of the two or more visualization items (30) included in the visualization object (26).

3. The method of any one preceding claim, wherein determining a value of the first object-related metric includes:
performing an anomaly analysis on a group of parameter values comprising the set of parameter values of at least one visualization item (30) included in the visualization object (26).

4. The method of claim 3, wherein determining a value of the first object-related metric includes:
performing an anomaly analysis separately on the set of parameter values of each of two or more visualization items (30) included in the visualization object (26).

5. The method of claim 3 or 4, wherein performing an anomaly analysis includes:
separating the parameter values of the group into at least one normally behaving subgroup and at least one anomalously behaving subgroup.

6. The method of any one preceding claim, comprising:

obtaining (S130), for each of a plurality of users, a value of the user-specific second object-related metric in relation to each of two or more of the plurality of visualization objects (26) associated with the user;
establishing, for each of the plurality of users, a user-specific object ranking on the basis of the value of the first object-related metric and the value of the user-specific second object-related metric of each of the two or more visualization objects (26) associated with the user; and
causing (S150) generation of a sensory-perceptible output indicative of the user-specific object ranking.

7. The method of claim 6, wherein establishing the user-specific object ranking includes:
determining, for each of the two or more visualization objects (26) associated with the user, an object ranking value representative of a multiplicative product of the value of the first object-related metric and the value of the user-specific second object-related metric.

8. The method of claim 6 or 7, wherein establishing the user-specific visualization object ranking includes:
obtaining an object usage matrix specifying for each of the plurality of users a usage value in relation to each of the two or more visualization objects (26) associated with the user, the usage value representative of a probability of usage of the visualization object (26) by the user.

9. The method of claim 8, wherein obtaining the object usage matrix includes:

logging, for each of the plurality of users, visualization object interactions of the user; and
determining the usage value based on a logged number of visualization object interactions.

10. The method of claim 8 or 9, wherein establishing the user-specific visualization object ranking includes:

decomposing the object usage matrix into the product of a job role matrix (P) and a toolkit matrix (Q), the job role matrix ($\underline{P}$) specifying

for each of the plurality of users a job role value in relation to each of two or more job roles, the job role value representative of a probability of the user being involved in a task related to the job role, the toolkit matrix ($Q$) specifying for each of two or more visualization objects a toolkit value in relation to each of the two or more job roles, the toolkit value representative of a probability of the visualization object requiring to be inspected in order to accomplish a task related to the job role

wherein, optionally, establishing the user-specific visualization object ranking includes: determining an object ranking matrix as a product of the job role matrix ($P$), the toolkit matrix ($Q$) and a vector ($c$) including for each of the two or more visualization objects (26) the value of the first object-related metric.

11. The method of any one of claims 6 to 10, wherein obtaining a value of the user-specific second object-related metric includes:

for each of one or more of the plurality of visualization objects (26), assigning a default value to the user-specific second object-related metric based on the non-availability of a sufficient amount of logged visualization object interactions associated with the user, the method optionally comprising: adjusting the assigned default value of the user-specific second object-related metric based on time.

12. The method of any one preceding claim, wherein obtaining a value of the first object-related metric includes:

for each of one or more of the plurality of visualization objects (26), assigning a default value to the first object-related metric based on the non-availability of a sufficient set of parameter values of the measurable parameter of at least one visualization item included in the visualization object (26), the method optionally comprising: adjusting the assigned default value of the first object-related metric based on time.

13. The method of any one preceding claim, wherein the measurable parameters are derived at least in part from at least one of a radio access network part and a core network part of a mobile telecommunications network.

14. A computer program product comprising program code portions that, when executed on at least one processor, configure the processor to perform the method of any one preceding claim.

15. An apparatus (200) operable in a network analytics tool capable of analyzing a time-varying set of parameter values for each of a plurality of measurable parameters and visually outputting a plurality of visualization objects (26), each of the visualization objects (26) comprising one or more visualization items (30), each visualization item (30) representative of one of the plurality of measurable parameters, the apparatus configured to perform the method of any one of claims 1 to 13.

**Patentansprüche**

1. Verfahren für ein Netzwerkanalysewerkzeug, das zum Analysieren eines zeitabhängigen Satzes von Parameterwerten für jeden einer Mehrzahl von messbaren Parametern und visuellen Ausgeben einer Mehrzahl von Visualisierungsobjekten (26) imstande ist, wobei jedes der Visualisierungsobjekte (26) ein oder mehrere Visualisierungsobjekte (30) umfasst, jedes Visualisierungselement (30) einen der Mehrzahl von messbaren Parametern darstellt und das Verfahren Folgendes umfasst:

Erhalten (S120) eines Wertes einer ersten objektbezogenen Metrik für jedes der Mehrzahl von Visualisierungsobjekten (26); Erstellen (S140) einer Visualisierungsobjektrangfolge auf der Basis des Wertes der ersten objektbezogenen Metrik und eines Wertes einer zweiten objektbezogenen Metrik jedes der Mehrzahl von Visualisierungsobjekten (26), wobei der Wert der zweiten objektbezogenen Metrik basierend auf einer benutzerspezifischen Rangfolge messbarer Parameter unabhängig von den Parameterwerten der messbaren Parameter jedes in dem Visualisierungsobjekt (26) umfassten Visualisierungselements (30) bestimmt wird; und Veranlassen (S150) der Erzeugung einer sensorisch wahrnehmbaren Ausgabe, die die Visualisierungsobjektrangfolge anzeigt, die auf der Basis des erhaltenen Wertes der ersten objektbezogenen Metrik und des erhaltenen Wertes der zweiten objektbezogenen Metrik jedes der Mehrzahl von Visualisierungsobjekten (26) erstellt wurde, wobei das Erhalten eines Wertes der ersten objektbezogenen Metrik Folgendes umfasst: für jedes von einem oder mehreren der Mehrzahl von Visualisierungsobjekten (26) Bestimmen eines Wertes der ersten objektbezogenen Metrik zumindest basierend auf dem Satz von Parameterwerten des messbaren Parameters jedes in dem Visualisierungsobjekt (26) umfassten Visualisierungselements (30).

**2.** Verfahren nach Anspruch 1, wobei das Bestimmen eines Wertes der ersten objektbezogenen Metrik Folgendes umfasst:

Bestimmen (S110) eines Wertes einer elementbezogenen Metrik für jedes von zwei oder mehr in dem Visualisierungsobjekt (26) umfassten Visualisierungselementen (30) basierend auf dem Satz von Parameterwerten des Visualisierungselements (30);

Bestimmen des Wertes der ersten objektbezogenen Metrik basierend auf dem bestimmten Wert der elementbezogenen Metrik jedes der zwei oder mehr in dem Visualisierungsobjekt (26) umfassten Visualisierungselemente (30).

**3.** Verfahren nach einem der vorhergehenden Ansprüche, wobei das Bestimmen eines Wertes der ersten objektbezogenen Metrik Folgendes umfasst:
Durchführen einer Anomalieanalyse an einer Gruppe von Parameterwerten, die den Satz von Parameterwerten mindestens eines in dem Visualisierungsobjekt (26) umfassten Visualisierungselements (30) umfasst.

**4.** Verfahren nach Anspruch 3, wobei das Bestimmen eines Wertes der ersten objektbezogenen Metrik Folgendes umfasst:
separates Durchführen einer Anomalieanalyse an dem Satz von Parameterwerten jedes von zwei oder mehr in dem Visualisierungsobjekt (26) umfassten Visualisierungselementen (30).

**5.** Verfahren nach Anspruch 3 oder 4, wobei das Durchführen einer Anomalieanalyse Folgendes umfasst:
Aufteilen der Parameterwerte der Gruppe in mindestens eine sich normal verhaltende Teilgruppe und mindestens eine sich anormal verhaltende Teilgruppe.

**6.** Verfahren nach einem der vorhergehenden Ansprüche, umfassend:

Erhalten (S130) eines Wertes der benutzerspezifischen zweiten objektbezogenen Metrik in Bezug auf jedes von zwei oder mehr der Mehrzahl von Visualisierungsobjekten (26), die mit dem Benutzer assoziiert sind, für jeden einer Mehrzahl von Benutzern;

Erstellen einer benutzerspezifischen Objektrangfolge für jeden der Mehrzahl von Benutzern auf der Basis des Wertes der ersten objektbezogenen Metrik und des Wertes der benutzerspezifischen zweiten objektbezogenen Metrik jedes der zwei oder mehr mit dem Benutzer assoziierten Visualisierungsobjekte (26); und

Veranlassen (S150) der Erzeugung einer sensorisch wahrnehmbaren Ausgabe, die die benutzerspezifische Objektrangfolge anzeigt.

**7.** Verfahren nach Anspruch 6, wobei das Erstellen der benutzerspezifischen Objektrangfolge Folgendes umfasst:
Bestimmen eines Objektrangfolgewerts, der ein Multiplikationsprodukt des Wertes der ersten objektbezogenen Metrik und des Werts der benutzerspezifischen zweiten objektbezogenen Metrik darstellt, für jedes der zwei oder mehr mit dem Benutzer assoziierten Visualisierungsobjekte (26).

**8.** Verfahren nach Anspruch 6 oder 7, wobei das Erstellen der benutzerspezifischen Visualisierungsobjektrangfolge Folgendes umfasst:
Erhalten einer Objektnutzungsmatrix, die für jeden der Mehrzahl von Benutzern einen Nutzungswert in Bezug auf jedes der zwei oder mehr mit dem Benutzer assoziierten Visualisierungsobjekte (26) spezifiziert, wobei der Nutzungswert eine Wahrscheinlichkeit der Nutzung des Visualisierungsobjekts (26) durch den Benutzer darstellt.

**9.** Verfahren nach Anspruch 8, wobei das Erhalten der Objektnutzungsmatrix Folgendes umfasst:

Protokollieren von Visualisierungsobjektinteraktionen des Benutzers für jeden der Mehrzahl von Benutzern; und

Bestimmen des Nutzungswerts basierend auf einer protokollierten Anzahl von Visualisierungsobjektinteraktionen.

**10.** Verfahren nach Anspruch 8 oder 9, wobei das Erstellen der benutzerspezifischen Visualisierungsobjektrangfolge Folgendes umfasst:

Zerlegen der Objektnutzungsmatrix in das Produkt einer Jobrollenmatrix (P) und einer Toolkitmatrix (Q), wobei die Jobrollenmatrix (P) für jeden der Mehrzahl von Benutzern einen Jobrollenwert in Bezug auf zwei oder mehr Jobrollen spezifiziert, wobei der Jobrollenwert eine Wahrscheinlichkeit darstellt, dass der Benutzer an einer mit der Jobrolle in Beziehung stehenden Aufgabe beteiligt ist, die Toolkitmatrix (Q) für jedes von zwei oder mehr Visualisierungsobjekten einen Toolkitwert in Bezug auf jede der zwei oder mehr Jobrollen spezifiziert, wobei der Toolkitwert eine Wahrscheinlichkeit spezifiziert, dass das Visualisierungsobjekt überprüft werden muss, um eine mit der Jobrolle in Beziehung stehende Aufgabe zu erfüllen,

wobei optional das Erstellen der benutzerspezifischen Visualisierungsobjektrangfolge Folgendes umfasst:

Bestimmen einer Objektrangfolgematrix als ein Produkt der Jobrollenmatrix (P), der Toolkitmatrix (Q) und eines Vektors (c), der für jedes der zwei oder mehr Visualisierungsobjekte (26) den Wert der ersten objektbezogenen Metrik umfasst.

11. Verfahren nach einem der Ansprüche 6 bis 10, wobei das Erhalten eines Wertes der benutzerspezifischen zweiten objektbezogenen Metrik Folgendes umfasst:

Zuordnen eines Standardwerts zu der benutzerspezifischen zweiten objektbezogenen Metrik für jedes von einem oder mehreren der Mehrzahl von Visualisierungsobjekten (26) basierend auf der Nichtverfügbarkeit einer ausreichenden Menge an protokollierten Visualisierungsobjektinteraktionen, die mit dem Benutzer assoziiert sind,
wobei das Verfahren optional Folgendes umfasst: Anpassen des zugeordneten Standardwerts der benutzerspezifischen zweiten objektbezogenen Metrik basierend auf der Zeit.

12. Verfahren nach einem der vorhergehenden Ansprüche, wobei das Erhalten eines Wertes der ersten objektbezogenen Metrik Folgendes umfasst:

für jedes von einem oder mehreren der Mehrzahl von Visualisierungsobjekten (26) Zuordnen eines Standardwerts zu der ersten objektbezogenen Metrik basierend auf der Nichtverfügbarkeit eines ausreichenden Satzes von Parameterwerten des messbaren Parameters mindestens eines in dem Visualisierungsobjekt (26) umfassten Visualisierungselements,
wobei das Verfahren optional Folgendes umfasst: Anpassen des zugeordneten Standardwerts der ersten objektbezogenen Metrik basierend auf der Zeit.

13. Verfahren nach einem der vorhergehenden Ansprüche, wobei die messbaren Parameter zumindest teilweise von mindestens einem von einem Funkzugangsnetzwerkteil und einem Kernnetzwerkteil eines Mobilfunktelekommunikationsnetzwerks abgeleitet werden.

14. Computerprogrammprodukt, umfassend Programmcodeabschnitte, die bei Ausführung auf mindestens einem Prozessor den Prozessor zum Durchführen des Verfahrens nach einem der vorhergehenden Ansprüche konfigurieren.

15. Vorrichtung (200), die in einem Netzwerkanalysewerkzeug betrieben werden kann, das zum Analysieren eines zeitabhängigen Satzes von Parameterwerten für jeden einer Mehrzahl von messbaren Parametern und visuellen Ausgeben einer Mehrzahl von Visualisierungsobjekten (26) imstande ist, wobei jedes der Visualisierungsobjekte (26) ein oder mehrere Visualisierungsobjekte (30) umfasst und jedes Visualisierungselement (30) einen der Mehrzahl von messbaren Parametern darstellt, wobei die Vorrichtung zum Durchführen des Verfahrens nach einem der Ansprüche 1 bis 13 konfiguriert ist.

**Revendications**

1. Procédé pour un outil d'analyse de réseau capable d'analyser un ensemble variable dans le temps de valeurs de paramètres pour chacun d'une pluralité de paramètres mesurables et de délivrer visuellement une pluralité d'objets de visualisation (26), chacun des objets de visualisation (26) comprenant un ou plusieurs éléments de visualisation (30), chaque élément de visualisation (30) étant représentatif de l'un de la pluralité de paramètres mesurables, le procédé comprenant :

l'obtention (S120), pour chacun de la pluralité d'objets de visualisation (26), d'une valeur d'une première métrique liée à l'objet ;
l'établissement (S140) d'un classement d'objets de visualisation sur la base de la valeur de la première métrique liée à l'objet et d'une valeur d'une deuxième métrique liée à l'objet de chacun de la pluralité d'objets de visualisation (26), la valeur de la deuxième métrique liée à l'objet étant déterminée sur la base d'un classement spécifique à l'utilisateur de paramètres mesurables indépendamment des valeurs de paramètres du paramètre mesurable de chaque élément de visualisation (30) compris dans l'objet de visualisation (26) ; et
le déclenchement (S150) d'une génération d'une sortie sensorielle perceptible indicative du classement d'objets de visualisation établi sur la base de la valeur obtenue de la première métrique liée à l'objet et de la valeur obtenue de la deuxième métrique liée à l'objet de chacun de la pluralité d'objets de visualisation (26),
dans lequel l'obtention d'une valeur de la première métrique liée à l'objet comprend :
pour chacun d'un ou plusieurs de la pluralité d'objets de visualisation (26), la détermination d'une valeur de la première métrique liée à l'objet sur la base au moins de l'ensemble de valeurs de paramètres du paramètre mesurable de chaque élément de visualisation (30) compris dans l'objet de visualisation (26).

2. Procédé selon la revendication 1, dans lequel la détermination d'une valeur de la première métrique liée à l'objet comprend :

la détermination (S110), pour chacun de deux éléments de visualisation (30) ou plus compris dans l'objet de visualisation (26), d'une valeur d'une métrique liée à l'élément sur la base de l'ensemble de valeurs de paramètres de l'élément de visualisation (30) ;

la détermination de la valeur de la première métrique liée à l'objet sur la base de la valeur déterminée de la métrique liée à l'élément de chacun des deux éléments de visualisation (30) ou plus compris dans l'objet de visualisation (26).

**3.** Procédé selon l'une quelconque des revendications précédentes, dans lequel la détermination d'une valeur de la première métrique liée à l'objet comprend :
la réalisation d'une analyse d'anomalie sur un groupe de valeurs de paramètres comprenant l'ensemble de valeurs de paramètres d'au moins un élément de visualisation (30) compris dans l'objet de visualisation (26).

**4.** Procédé selon la revendication 3, dans lequel la détermination d'une valeur de la première métrique liée à l'objet comprend :
la réalisation d'une analyse d'anomalie séparément sur l'ensemble de valeurs de paramètres de chacun de deux éléments de visualisation (30) ou plus compris dans l'objet de visualisation (26).

**5.** Procédé selon la revendication 3 ou 4, dans lequel la réalisation d'une analyse d'anomalie comprend :
la séparation des valeurs de paramètres du groupe en au moins un sous-groupe de comportement normal et au moins un sous-groupe de comportement anormal.

**6.** Procédé selon l'une quelconque des revendications précédentes, comprenant :

l'obtention (S130), pour chacun d'une pluralité d'utilisateurs, d'une valeur de la deuxième métrique liée à l'objet spécifique à l'utilisateur en ce qui concerne chacun de deux ou plus de la pluralité d'objets du visualisation (26) associés à l'utilisateur ;
l'établissement, pour chacun de la pluralité d'utilisateurs, d'un classement d'objets spécifique à l'utilisateur sur la base de la valeur de la première métrique liée à l'objet et de la valeur de la deuxième métrique liée à l'objet spécifique à l'utilisateur de chacun des deux objets de visualisation (26) ou plus associés à l'utilisateur ; et
le déclenchement (S150) d'une génération d'une sortie sensorielle perceptible indicative du classement d'objets spécifique à l'utilisateur.

**7.** Procédé selon la revendication 6, dans lequel l'établissement du classement d'objets spécifique à l'utilisateur comprend :
la détermination, pour chacun des deux objets de visualisation (26) ou plus associés à l'utilisateur, d'une valeur de classement d'objets représentative d'un produit multiplicatif de la valeur de la première métrique liée à l'objet et de la valeur de la deuxième métrique liée à l'objet spécifique à l'utilisateur.

**8.** Procédé selon la revendication 6 ou 7, dans lequel l'établissement du classement d'objets de visualisation spécifique à l'utilisateur comprend :
l'obtention d'une matrice d'utilisation d'objet spécifiant, pour chacun de la pluralité d'utilisateurs, une valeur d'utilisation en ce qui concerne chacun des deux objets de visualisation (26) ou plus associés à l'utilisateur, la valeur d'utilisation étant représentative d'une probabilité d'utilisation de l'objet de visualisation (26) par l'utilisateur.

**9.** Procédé selon la revendication 8, dans lequel l'obtention de la matrice d'utilisation d'objet comprend :

l'enregistrement, pour chacun de la pluralité d'utilisateurs, d'interactions d'objets de visualisation de l'utilisateur ; et
la détermination de la valeur d'utilisation sur la base d'un nombre d'interactions d'objets de visualisation enregistrées.

**10.** Procédé selon la revendication 8 ou 9, dans lequel l'établissement du classement d'objets de visualisation spécifique à l'utilisateur comprend :

la décomposition de la matrice d'utilisation d'objet en le produit d'une matrice de rôle de travail ($\underline{P}$) et d'une matrice de boîte à outils ($\underline{Q}$), la matrice de rôle de travail ($\underline{P}$) spécifiant, pour chacun de la pluralité d'utilisateurs, une valeur de rôle de travail en ce qui concerne chacun de deux rôles de travail ou plus, la valeur de rôle de travail étant représentative d'une probabilité que l'utilisateur soit impliqué dans une tâche liée au rôle de travail, la matrice de boîte à outils ($\underline{Q}$) spécifiant, pour chacun de deux objets de visualisation ou plus, une valeur de boîte à outils en ce qui concerne chacun des deux rôles de travail ou plus, la valeur de boîte à outils étant représentative d'une probabilité de devoir inspecter l'objet de visualisation afin d'accomplir une tâche liée au rôle de travail,
dans lequel, facultativement, l'établissement du classement d'objets de visualisation spécifique à l'utilisateur comprend :
la détermination d'une matrice de classement d'objets en tant qu'un produit de la matrice de rôle de travail ($\underline{P}$), de la matrice de boîte à outils

($Q$) et d'un vecteur ($c$) comprenant, pour chacun des deux objets du visualisation (26) ou plus, la valeur de la première métrique liée à l'objet.

11. Procédé selon l'une quelconque des revendications 6 à 10, dans lequel l'obtention d'une valeur de la deuxième métrique liée à l'objet spécifique à l'utilisateur comprend :

    pour chacun d'un ou plusieurs de la pluralité d'objets de visualisation (26), l'attribution d'une valeur par défaut à la deuxième métrique liée à l'objet spécifique à l'utilisateur sur la base de l'indisponibilité d'une quantité suffisante d'interactions d'objets de visualisation enregistrées associées à l'utilisateur,
    le procédé comprenant facultativement : l'ajustement de la valeur par défaut attribuée de la deuxième métrique liée à l'objet spécifique à l'utilisateur sur la base du temps.

12. Procédé selon l'une quelconque des revendications précédentes, dans lequel l'obtention d'une valeur de la première métrique liée à l'objet comprend :

    pour chacun d'un ou plusieurs de la pluralité d'objets du visualisation (26), l'attribution d'une valeur par défaut à la première métrique liée à l'objet sur la base de l'indisponibilité d'un ensemble suffisant de valeurs de paramètres du paramètre mesurable d'au moins un élément du visualisation compris dans l'objet de visualisation (26),
    le procédé comprenant facultativement : l'ajustement de la valeur par défaut attribuée de la première métrique liée à l'objet sur la base du temps.

13. Procédé selon l'une quelconque des revendications précédentes, dans lequel les paramètres mesurables sont déduits au moins en partie d'au moins l'une d'une partie de réseau d'accès radio et d'une partie de réseau central d'un réseau de télécommunication mobile.

14. Produit programme informatique comprenant des parties de code de programme qui, lorsqu'elles sont exécutées sur au moins un processeur, configurent le processeur pour réaliser le procédé selon l'une quelconque des revendications précédentes.

15. Appareil (200) utilisable dans un outil d'analyse de réseau capable d'analyser un ensemble variable dans le temps de valeurs de paramètres pour chacun d'une pluralité de paramètres mesurables et de délivrer visuellement une pluralité d'objets de visualisation (26), chacun des objets de visualisation (26) comprenant un ou plusieurs éléments de visualisation (30), chaque élément de visualisation (30) étant représentatif de l'un de la pluralité de paramètres mesurables, l'appareil étant configuré pour réaliser le procédé selon l'une quelconque des revendications 1 à 13.

# Figure 1

**(New Dashboard Definitions)**

- Dashboard Database — 16
- User Profiler Node — 36
- Subjective Weighting Node — 38
- UI — 14
- Dashboard Ranking Node — 34
- Content Importance Calculator Node — 32
- Memory Fading Node — 42
- User Interaction Collector Node — 40
- (Feedback)
- Raw Database — 18
- Content Importance Scores — 20
- User Interactions Database — 22
- User-specific Dashboard Recommendation — 24
- 10
- 12
- 26 26 28
- 26 28
- 26 26 28
- 26 28
- 30

EP 4 348 964 B1

20

Figure 2

## Figure 3

(New Dashboard Definitions)

User Profiler Node

Subjective Weighting Node — 38

14

UI

46

36

34

Dashboard Ranking Node

40

48

32

Content Importance Calculator Node

42

Memory Fading Node

User Interaction Collector Node

(Feedback)

Interface

16

Dashboard Database

Raw Database

18

Content Importance Scores

20

User Interactions Database

22

44

User-specific Dashboard Recommendation

24

EP 4 348 964 B1

22

# Figure 4

Acquire a time-varying set of parameter values for each of a plurality of measurable parameters of a network — S100

Determine, for each of one or more visualization items included in a visualization object, a value of an item-related metric based on the acquired set of parameter values associated with the visualization item — S110

Determine a value of a first object-related metric based on the determined value of the item-related metric of each visualization item included in the visualization object — S120

Determine a value of a second object-related metric of the visualization object based on a user-specific ranking of two or more of the measurable parameters — S130

Determine a relative ranking position of the visualization object based on the determined values of the first object-related metric and the second object-related metric — S140

Cause generation of a sensory-perceptible output indicative of the determined relative ranking position of the visualization object — S150

Analytics Apparatus 200

Processor ⟶ 210

Memory ⟶ 220

Input Interface ⟶ 230

Output Interface ⟶ 240

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100057646 A1

- US 20180285756 A1

**Non-patent literature cited in the description**

- The Recommendation Dashboard: A System to Visualise and Organise Recommendations. **G. TSCHINKEL** ; **C. DI SCIASCIO** ; **B. MUTLU** ; **V. SABOL**. 19th International Conference on Information Visualisation. IEEE, 2015, 241-244

- **A. KEY** ; **B. HOWE** ; **D. PERRY** ; **C. ARAGON**. VizDeck: self-organizing dashboards for visual analytics. *SIGMOD '12: Proceedings of the 2012 ACM SIGMOD International Conference on Management of Data*, 2012, 681-684